# FASCICULE DE BREVET EUROPEEN

(11) **EP 1 559 322 B1**
(45) Date de publication et mention de la délivrance du brevet: **23.07.2008**
(21) Numéro de dépôt: 04002032.3
(22) Date de dépôt: 30.01.2004
(51) Int. Cl.: A21D 8/04, A21D 10/00, A21D 13/00, C12N 1/18

(54) **Levures de panification résistantes à une concentration élevée de sucre dans la pâte et à la présence d'acides organiques faibles**
Bäckereihefen mit verbesserter Toleranz gegenüber einem hohen Zuckergehalt im Teig und gegenüber schwachen organischen Säuren
Bakers yeast with improved resistance against elevated sugar levels in dough and against weak organic acids

(43) Date de publication de la demande: 03.08.2005
(73) Titulaire: Lesaffre et Compagnie, 75001 Paris (FR)
(72) Inventeur: Colavizza, Didier, F- 59100 Roubaix (FR); Loiez, Annie, 59800 Lille (FR); Bartolucci, Jean-Charles, 59350 Saint André Lez Lille (FR); Quipourt-Isnard, Anne-Dominique, 59700 Marcq-en-Baroeul (FR)
(74) Mandataire: Becker, Philippe

(56) Documents cités:
- EP-A- 1 036 841
- WO-A-96/38538
- DATABASE WPI Section Ch, Week 200123 Derwent Publications Ltd., London, GB; Class D11, AN 2001-226904 XP002286924 -& WO 01/21763 A1 (KANEGAFUCHI CHEM IND CO LTD) 29 mars 2001 (2001-03-29)
- PATENT ABSTRACTS OF JAPAN vol. 2000, no. 12, 3 janvier 2001 (2001-01-03) -& JP 2000 262275 A (ORIENTAL YEAST CO LTD), 26 septembre 2000 (2000-09-26)

## Description

### DOMAINE DE L'INVENTION

La présente est relative à de nouvelles souches de levures de panification, performantes sur pâtes fortement sucrées; et éventuellement en présence d'inhibiteurs ce moisissures , elle vise également, en tant que produits industriels nouveaux, les levures de panification fraîches ou sèches obtenues à partir de ces souches.

### DESCRIPTION DE L'ETAT DE LA TECHNIQUE

Actuellement, le marché des produits de panification plus ou moins fortement sucrés et/ou contenant des inhibiteurs de moisissures représente un pourcentage important du marché mondial.

EP 1 036 841 A1 décrit une souche de Saccharomyces cerevisiae performante sur pâtes fortement sucrées, notamment la souche P-712, FERM BP-7034, et des pâtes boulangères la comprenant.

Il existe des souches de levure de panification dites « rapides », adaptées aux pales sans sucre ou peu sucrées, c'est-à-dire ne contenant pas plus de 7% en masse de sucre par rapport à la farine. Les performances fermentaires de ces levures diminuent fortement lorsque la teneur en sucre de la pâte atteint ou dépasse 15% en masse par rapport à la farine.

Les produits cuits de panification, en particulier quand ils sont vendus sous forme de tranches, sont sujets au de moisissures au bout de quelques jours de stockage. En conséquence, il est souvent essentiel d'ajouter la composition des pains destinés à être tranchés au cours de leur fabrication, des agents anti-moisissures ou anti-fongiques appartenant à la famille des acides organiques faibles (ayant un pKa de 3 à 6) et de leurs sels, comme l'acide acétique, l'acide propionique, l'acide sorbique ou leurs sels, ou d'autres conservateurs utilisés de façon classique dans le domaine de la panification.

Ces acides ont un effet inhibiteur plus ou moins important sur les levures de panification. Dans la pratique, c'est le propionate de calcium qui est le plus utilisé comme inhibiteur de moisissures dans la panification.

### DEFINITION DE L'INVENTION

La présente invention permet de remédier au moins partiellement aux effets inhibiteurs d'une teneur élevée en sucres dans la pâte, éventuellement en présence d'un inhibiteur de moisissures tel que décrit ci-dessus. La présente invention est relative à de nouvelles souches de levure de panification, et de manière plus générale à une nouvelle famille de souches de levure de panification, correspondant à des levures performantes sur pâtes sucrées, additionnées ou non d'inhibiteurs de moisissures comme les acides organiques faibles et/ou leurs sels. Grâce aux différentes souches de levure appartenant à cette famille, le « proof time », mesuré dans différentes recettes panaires, se trouve diminué par l'emploi d'une de ces nouvelles souches. Le proof-time est défini comme le temps nécessaire pour que la pâte boulangère atteigne une certaine hauteur dans le moule et puisse être cuite

Une des nouvelles souches de *Saccharomyces cerevisiae* ainsi obtenue a été déposée le 12 février 2003 auprès de la CNCM (Collection Nationale de Cultures de Micro-organismes, Institut Pasteur, 25 rue du Docteur Roux, F-75724 Paris Cedex 15, France) sous le numéro I-2971.

Deux autres nouvelles souches de *Saccharomyces cerevisiae* ainsi obtenue ont été déposées le 25 novembre 2003 auprès de la CNCM, sous les numéros I-3142 et 1-3143.

La présente invention concerne les trois souches décrites ci-dessus et l'ensemble des souches appartenant à la même famille, c'est-à-dire toutes les souches qui partagent les mêmes propriétés que les trois souches décrites ci-dessus, ainsi que toutes les souches qui peuvent être dérivées de cette famille de souches, et en particulier des trois souches déposées, par toute technique de transformation quelle qu'elle soit, comme par exemple la mutagenèse et la transformation génétique.

### DESCRIPTION DETAILLEE DE L'INVENTION

Un objectif de la présente invention est de fournir des souches, donnant après culture industrielle une levure de panification possédant une très grande tolérance aux sucres, ou encore une très grande tolérance à une pression osmotique élevée, en présence ou non d'au moins un inhibiteur de moisissures, c'est-à-dire des souches de levure adaptées à des concentrations élevées en saccharose, en glucose, en fructose, ou encore, en un mélange de ces sucres et éventuellement d'autres sucres fermentescibles: en présence ou non par exemple de propionate de calcium.

Les levures, objet de l'invention, ont été obtenues par croisements systématiques entre elles des souches utilisées pour produire des levures de panification du commerce (souches du commerce) ou des centres de collections publics connues comme étant trés osmotolérantes et des souches du commerce ou des centres de collections publiques connues comme étant plutôt osmotolérantes et peu sensibles à la présence des acides organiques faibles ou de leurs sels, utilisés comme inhibiteurs de moisissures. Le programme de sporulation et de croisement a été réalisé selon ses techniques classiques comme celles enseignées dans le chapitre 7 «Sporulation and Hydridization of Yeast » par R.R. Fowell, de l'ouvrage «The Yeasts », Volume 1, édité par A.H. Rose et J. S. Harrison, 1969- Academic Press.

Les souches obtenues par ce programme d'hybridation ont été multipliées en laboratoire par des méthodes conventionnelles, avec adaptation à la présence d'acide(s) organique(s) faible(s) comme, enseigné dans le brevet US n° 4 318 991.

Les levures ainsi, obtenues à partir des souches issues du programme de croisement ci-dessus défini ont été sélectionnées par des mini-tests de panification en schéma NO-TIME DOUGH, c'est-à-dire en schéma direct où il n'y a pratiquement pas de première fermentation entre un pétrissage intensif et la division de la pâte, les pâtons obtenus étant fermentés en moule entre 35°C et 40°C, puis. Cette dernière fermentation, qui est la fermentation essentielle dans un tel schéma, est appelée « proof » en anglais, « apprêta » en français. Le « proof-time » ou temps d'apprêt est défini comme le temps nécessaire pour que la pâte atteigne une hauteur donnée dans le moule, correspondant au développement de la pâte souhaitée pour qu'elle soit mise au four.

Les variables dans ces mini-tests de panification ont été :
- le pourcentage en masse de sucre par rapport à la farine (tous les pourcentages étant exprimés en pourcentage dit du boulanger, le pourcentage dit du boulanger étant une méthode de calcul appliquée aux rapports des ingrédients dans laquelle la masse totale de la farine représente toujours 100% et la masse des autres ingrédients est calculée par rapport à cette base de farine) ;
- le pourcentage en masse de propionate de calcium par rapport à la farine.

Le témoin est une pâte obtenue dans les mêmes conditions et avec une même composition de pâte , si ce n'est qu'elle est ensemencée avec une levure fabriquée dans les mêmes conditions que les souches testées, avec adaptation à la présence d'acide(s) organique(s) faible(s), mais cette fois-ci obtenue avec la souche de levure de boulangerie NCYC 996, déposée à la NCYC (National Collection of Yeast Cultures, Institute of Food Research, Norwich Research Park, Colney, Norwich, NR4 7UA, United Kingdom), et décrite notamment dans le brevet US n° 4 396 632. Cette souche est, depuis une vingtaine d'années, la souche de référence pour obtenir des levures de boulangerie commerciales performantes sur pâtes sucrées contenant ou non des inhibiteurs de moisissures.

Les critères de sélection utilisés dans une première sélection ont été au moins deux des trois critères suivants, et de préférence les trois critères suivants pris en combinaison :
1. sur pâte contenant 15% de sucre (pourcentage du boulanger) avec ou sans présence de 0,4% de propionate de calcium (pourcentage du boulanger), les souches sélectionnées correspondent aux levures de panification donnant un proof-time au moins équivalent, c'est-à-dire inférieur ou égal au proof-time obtenu avec le témoin ;
2. sur pâte contenant 25% de sucre (pourcentage du boulanger) et 0,4% de propionate de calcium (pourcentage du boulanger), les souches sélectionnées correspondent aux levures de panification donnant un proof-time inférieur d'au moins 5% et de préférence d'au moins 10% au proof-time du témoin ;
3. sur pâte à 40% de sucre (pourcentage du boulanger), les souches sélectionnées correspondent aux levures de panification donnant un proof-time inférieur d'au moins 20%, de préférence d'au moins 30% et de préférence encore d'au moins 35% au proof-time du témoin.

Les deux critères de sélection suivants ont été utilisés dans une deuxième sélection en combinaison de manière complémentaire à la première sélection ci-dessus décrite, la souche sélectionnée devant en plus satisfaire un de ces deux critères complémentaires :
1) Les levures de panification obtenues avec une souche issue de la première sélection doivent être résistantes au séchage, en d'autres termes dans les conditions de séchage décrites dans le brevet EP 0511108 ou le brevet US 5 741 695, elles ne doivent pas perdre plus de 30% de leur activité fermentative, à matières sèches constantes, mesurée avec le fermentomètre de Burrows et Harrison dans les tests A₅, A'₅, A₆, A'₆ décrits dans les documents ci-dessus mentionnées EP 0511108 et US 5 741 695.
2) Les levures de panification obtenues avec une souche issue de la première sélection, dans un schéma SPONGE and DOUGH, tel que défini dans le livre de référence « Bakers Handbook » de E. J. Pyler, publié par Sosland Publishing Co., caractérisé par une étape DOUGH où il est ajouté 25% de saccharose en masse par rapport à la farine totale mise en oeuvre dans le SPONGE and DOUGH, donnent par rapport à un DOUGH obtenu dans les mêmes conditions et ensemencé avec une levure de panification obtenue dans les mêmes conditions avec la souche NCYC 996 une durée de proof-time inférieure d'au moins 20%, de préférence d'au moins 30% et encore de préférence d'au moins 40%.

Selon la définition ci-dessus, un « SPONGE and DOUGH » process est un procédé de panification largement pratiqué avec deux étapes de fermentation :
- une première étape ou SPONGE qui correspond à la fermentation d'une pâte comprenant 50 à 70% de la farine totale mise en oeuvre, une partie de l'eau et la totalité de la levure pendant plusieurs heures, en général environ quatre heures,
- une seconde étape ou DOUGH dans laquelle le SPONGE après la fermentation décrite ci-dessus est combiné avec le reste de la farine, le reste de l'eau et les autres ingrédients de la pâte (dont la totalité du saccharose), le mélange ainsi constitué est pétri, divisé, mis en moule et fermenté, cette seconde fermentation en moule correspond au proof, sa durée étant le proof-time, puis cuit.

Une variante de l'invention consiste à utiliser les cinq tests de sélection directement en combinaison et à sélectionner les souches répondant à au moins trois de ces critères, et de préférence à quatre de ces critères de sélection.

Les procédés de croisement et de sélection ci-dessus décrits ont permis de sélectionner les trois souches déposées au CNCM sous les numéros : I-2971, I-3142 et I-3143.

Ces trois souches sélectionnées, et les autres souches susceptibles d'être sélectionnées par lesdits procédés de croisement et de sélection permettent d'obtenir au stade industriel des nouvelles levures de panification ayant les propriétés définies par les critères de sélection par rapport aux levures de panification obtenues avec la souche de référence NCYC 996.

De manière générale, les dites nouvelles levures de panification combinant au moins trois propriétés correspondant aux critères de sélection, et de préférence quatre propriétés définies par les critères de sélection, sont obtenues de la manière suivante avec les nouvelles souches de levure selon l'invention.

Lesdites souches de levure et la souche de référence NCYC 996 sont utilisées pour la fabrication de levures de panification comme décrit dans le manuel « Yeast Technology », 2ème édition, 1991, G. Reed et T.W. Nagodawithana, publié par Van Nostrand Reinhold, ISBN 0-442-31892-8.

La fabrication de levure de boulangerie comprend au moins les deux premières étapes de l'ensemble d'étapes suivantes :
- multiplication d'une souche pure de levure de boulangerie en plusieurs stades, d'abord en semi-anaérobiose, puis en aérobie,
- séparation par centrifugation de la levure de boulangerie ainsi produite de son milieu de culture, avec l'obtention d'une « crème de levure » liquide contenant environ entre 14 et 25% de matières sèches, voire des matières sèches plus élevées si la crème de levure est mélangée avec des produits osmotiques,
- filtration de la crème de levure liquide ainsi obtenue, en général sur un filtre rotatif sous vide et obtention d'une levure fraîche déshydratée contenant environ 26 à 35% de matières sèches,
- malaxage de ladite levure fraîche déshydratée en vue de l'obtention d'une masse bien homogène,
- extrusion de la levure ainsi obtenue, soit sous forme de pains de levure fraîche, soit sous forme, de levure fraîche émiettée commercialisés à environ 30% de matières sèches; soit sous forme de particules, en général de granules, si la levure est devinée à être séchée,
- séchage de manière ménagée, dans un courant d'air chaud, par exemple par fluidisation, des particules de levures obtenues par extrusion,
- emballage.

De préférence, les nouvelles levures selon l'invention sont adaptées, lors de leur dernier stade de multiplication au stress dû aux acides organiques faibles, par des procédés connus comme les procédés décrits dans les brevets US n°4 318 991 et n° 4 346 115, ou la combinaison de ces procèdes.

De manière récapitulative, les objets de la présente invention sont :
- chacune des trois nouvelles souches déposées à la CNCM sous les numéros I-2971, I-3142, I-3143
- les souches appartenant à la même famille de souches que ces trois souches, c'est-à-dire :
   - les souches susceptibles d'être obtenues par le même procède de croisement et le même procédé de sélection que ces trois souches,
   - les souches partageant les mêmes propriétés que ces trois souches ;
- les souches issues de l'une des souches ci-dessus définies;
- les nouvelles levures de panification obtenues avec les souches ci-dessus définies ;
- les nouveaux produits de panification obtenus avec les souches ci-dessus définies.

### TESTS A5, A'5, A6, A'6 DÉCRITS DANS EP 0511108 ET US5 741 695

Les tests A5, A'5, A6 et A'6 sont réalisés à l'aide du fermentomètre de Burrows et Harrison décrit dans le Journal of Institute of Brewing, vol. LXV, No. 1, janvier-février 1959 et sont exactement définis de la manière suivante.

### Test A5 (levures comprimées fraîches)

A 20g de farine incubée à 30 °C, on ajoute 4 de saccharose et ensuite on ajoute un poids de levure comprimée correspondant à 160 mg de matières cette levure étant délayée dans 15 ml d'eau contenant 27 g de NaCl par litre et 4 g de SO₄(NH)₂ par litre; on malaxe à l'aide d'une spatule pendant 40 secondes, de manière à obtenir une pâte que l'on place au bain-marié réglé à 30 °C ; treize minutes après le début, du malaxage, le récipient contenant la pâte est fermé hermétiquement ; la quantité totale de gaz produit est mesurée après 60, puis 120 minutes ; cette quantité est exprimée en ml à 30 °C et sous 760 mmHg.
Pour toutes les levures susceptibles de donner en 120 minutes un dégagement gazeux égal ou supérieur à 150 ml de CO₂, la quantité de sucres fermentescibles apportées uniquement par la farine est limitant ; en conséquence, le test est modifié de la manière suivante : on ajoute un poids de levure correspondant à 106 mg de matières sèches levure, au lieu de 160mg, et la lecture de la quantité de gaz produite est par convention multipliée par 1,5.

### Test A'5 (levures sèches)

Identique à l'essai A5, mais préalablement au malaxage, on réhydrate en 15 minutes les 160 mg de matières sèches levure qui se présentent sous forme de levure sèche active dans de l'eau distillée, à 38°C ; on utilise à cet effet 40% du volume d'eau d'hydratation mis en oeuvre ; le complément en eau, additionné de 405 mg de NaCl, est ajouté à l'issue des 15 minutes de réhydratation.

### Test A6 (levures comprimées fraîches)

A 25 g de farine incubée à 30°C, on ajoute 6,5 g de sucre glace et un poids de levure pressée correspondant à 320 mg de matières sèches, ensuite on procède comme pour l'essai A5.

### Test A6' (levures séches)

Essai identique à l'essai A6, en procédant pour réhydrater les 320 mg de matières sèches levure sous forme de levure sèche active comme pour l'essai A'5.

L'exemple suivant sert à illustrer la présente invention et ses avantages, sans pour autant la limiter.

### EXEMPLE

Les trois souches, NCYC 996 (souche de référence pour l'application visée) et les deux nouvelles souches I-2971 et I-3143, ont été produites sous forme de levure fraîche de panification par un procédé classique de fabrication comme décrit ci-dessus, comprenant lors de la dernière étape de culture une adaptation au stress dû à la présence d'acides organiques faibles selon les enseignements combinés des brevets US n° 4 318 991 et n° 4 346 115.

Les levures fraîches de panification à 32% de matières sèches ainsi obtenues ont été utilisées dans un même procédé de panification de type No Time Dough.

Deux recettes différentes ont été testées : la recette 1 contenant 25% en masse (pourcentage du boulanger) de saccharose et 0,4% en masse (pourcentage du boulanger) de propionate de calcium et la recette 2 contenant 40% en masse (pourcentage du boulanger) de saccharose.

Les recettes exprimées en pourcentage du boulanger sont données dans le tableau 1.

**Tableau 1**

| Ingrédient | Recette 1 | Recette 2 |
|---|---|---|
| Farine | 100 | 100 |
| Eau | 50 | 44 |
| Levure | 6 | 9 |
| Matières grasses | 7,5 | 7,5 |
| Améliorant | 1 | 1,5 |
| Saccharose | 25 | 40 |
| Sel | 1,7 | 1,7 |
| Propionate de | 0,4 | - |
| calcium | | |

L'améliorant apporte le mélange d'oxydants et de réducteurs, les enzymes ainsi que les émulsifiants classiques permettant une optimisation du processus de fabrication de ce schéma de panification en No Time Dough, une bonne qualité et une bonne conservation des pains obtenus.

Le protocole d'essai appliqué aux deux recettes ci-dessus est le suivant :
1. Peser les 6 ou 7 ingrédients solides.
2. Mesurer la température ambiante et la température de la farine.
3. Régler la température de l'eau de manière à obtenir une température de pâte de 27°C +/- 0,5°C.
4. Placer les ingrédients dans une cuve Mac Duffy® d'un pétrin HobartA200®.
5. Mélanger lentement en 1^{ère} vitesse pendant 1 min.
6. Démarrer le pétrissage selon le programme suivant :
   * en 1^{ère} vitesse pendant 5 min
   * laisser reposer pendant 5 min
   * en 2^{ème} vitesse pendant 5 min.
7. Obtention d'une pâte ayant une température de 27°C +/- 0,5°C.
8. Pointage de la masse à 23°C pendant 10 min.
9. Division en pâtons de 320 g.
10. Bouler peu serré et couvrir.
11. Laisser reposer pendant 10 min
12. Mise en moules des pâtons de 320 g
13. Détermination du temps d'apprêt ou du proof time dans un incubateur Stéricult® à 40°C et 90% d'humidité relative.
14. Cuisson dans un four à balancelle REED® à 190 °C pendant 22 min.
15. Mesure du volume des pains après un refroidissement d'au moins une heure et appréciation de la note des pains obtenus.

Les écarts de proof time entre le témoin et la levure fraîche obtenue à partir de la souche CNCM I-2971 selon l'invention et la levure fraîche obtenue à partir de la souche CNCM I-3143 selon l'invention sont donnés dans le tableau 2 ci-dessous.

**Tableau 2**

| | Recette 1 | Recette 2 |
|---|---|---|
| Levure fraîche témoin Souche NCYC 996 | T | T |
| Levure fraîche Souche CNCM I-2971 | -11% | -25% |
| Levure fraîche Souche CNCM I-3143 | -5% | -35% |

## Revendications

1. Souche de *Saccharomyces cerevisiae* déposée le 12 février 2003 auprès de la CNCM sous le numéro 1-2971.

2. Souche de *Saccharomyces cerevisiae* déposée le 25 novembre 2003 auprès de la CNCM sous le numéro I-3142.

3. Souche de *Saccharomyces cerevisiae* déposée le 25 novembre 2003 auprès de la CNCM sous le numéro 1-3143.

4. Souche de *Saccharomyces cerevisiae* dérivée d'une des souches selon l'une des revendications i à 3 partageant les propriétés de performance sur pâtes sucrées en présence d'acides organiques faibles et/ou leurs sels et susceptible d'être sélectionnée par les étapes c) et d) du procédé de préparation de la revendication 5.

5. Procédé de préparation de souches de *Saccharomyces cerevisiae* performantes sur des pâtes sucrées et ayant une bonne tolérance aux acides organiques faibles, dans lequel les souches sont obtenues par:
a) un procédé de croisement de souches étant plutôt osmotolérante et peu sensibles à la présence d'acides organique faibles ou de leurs sels ;
b) un procédé de multiplication avec adaptation à la présence d'acide(s) organique(s) faible(s) ;
c) un procédé de sélection comprenant une première étape de sélection en schéma NO-TIME DOUGH par aux moins deux des trois critères suivants pris en combinaison, et de préférence les trois critères suivants pris en combinaison :
1) sur pâte contenant 15% de sucre (pourcentage du boulanger) avec ou sans présence de 0.4% de propionate de calcium (pourcentage du boulanger), les souches sélectionnées correspondant aux levures de panification donnant un proof-time au moins équivalent, c'est-à-dire inférieur ou égal, au proof-time obtenu avec le témoin obtenu avec la souche de levure de boulangerie NCYC 996 ;
2) sur pâte contenant 25% de sucre (pourcentage du boulanger) et 0,4% de propionate de calcium (pourcentage du boulanger), les souches sélectionnées correspondant aux levures de panification donnant un proof-time inférieur d'au moins 5% et de préférence d'au moins 10% au proof-time du témoin ;
3) sur pâte à 40% de sucre (pourcentage du boulanger), les souches sélectionnées correspondant aux levures de panification donnant un proof-time inférieur d'au moins 20%, de préférence d'au moins 30% et de préférence encore d'au moins 35%, au proof-time du témoin ; et,
d) un procédé de sélection comprenant une deuxième sélection en combinaison de manière complémentaire à la première étape c), dans lequel la souche sélectionnée doit satisfaire un de ces deux critères complémentaires :
1) elle doit être résistante au séchage et ne doit pas perdre plus de 30% de son activité fermentative, à matières sèches constantes, mesurée avec le fermentomètre de Burrows et Harrison dans les tests A5, A'5, A6, A'6,
2) dans un schéma SPONGE and DOUGH **caractérisé par** une étape DOUGH où il est ajouté 25% de saccharose en masse par rapport à la farine totale mise en oeuvre dans le SPONGE and DOUGH, elle doit donner par rapport à un DOUGH obtenu dans les mêmes conditions et ensemencé avec une levure de panification obtenue dans les mêmes conditions avec la souche NCYC 996 une durée de proof-time inférieure d'au moins 20%, de préférence d'au moins 30% et encore de préférence d'au moins 40%.

6. Procédé selon la revendication 5, dans lequel on utilise les cinq tests de sélection directement en combinaison et on sélectionne les souches répondant à au moins trois de ces critères, et de préférence à quatre de ces critères de sélection.

7. Procédé de transformation d'une des souches selon l'une des revendications 1 à 4, dans lequel l'une des ces souches est transformée par mutagenèse ou transformation génétique.

8. Levure de boulangerie obtenue par culture d'une souche selon l'une quelconque des revendications 1 à 4.

9. Pâte boulangère contenant une levure de boulangerie selon la revendication 8.

10. Pâte boulangère selon la revendication 9, **caractérisée par le fait qu'**elle appartient à la famille des pâtes dans lesquelles la fermentation se fait en présence d'une pression osmotique comme celle régnant dans les pâtes contenant au moins 15% de sucre par rapport à la farine, de préférence au moins 25% de sucre par rapport à la farine et encore de préférence environ 40% de sucre par rapport à la farine.

11. Pâte boulangère selon la revendication 10, **caractérisée par le fait qu'**elle contient des inhibiteurs de moisissures, de préférence sous forme d'acides organiques faibles ou leurs sels, et encore de préférence sous forme de propionate.

12. Procédé de préparation d'un produit cuit de panification utilisant la pâte boulangère selon l'une des revendications 9 à 11.

13. Produit de panification susceptible d'être obtenu par le procédé selon la revendication 12.

## Claims

1. Strain of *Saccharomyces cerevisiae* deposited on February 12, 2003, in the CNCM under the accession number I-2971.

2. Strain of *Saccharomyces cerevisiae* deposited on November 25, 2003, n the CNCM under the accession number I-3142.

3. Strain of *Saccharomyces cerevisiae* deposited on November 25, 2003, n the CNCM under the accession number I-3143.

4. Strain of *Saccharomyces cerevisiae* derived from one of the strains according to anyone of claims 1 to 3 sharing the properties of performance on sweet dough in presence of weak organic acids and/or salts thereof and selectable by steps c) and d) of the preparation process of claim 5.

5. A process for the preparation of *Saccharomyces cerevisiae* strains effective on sweet dough and having a high tolerance to weak organic acids, wherein the strains are obtained by:
a) cross-hybridizing strains being osmotolerant and low sensitive to the presence of weak organic acids and/or salts thereof;
b) multiplication with adaptation to the presence of weak organic acid(s);
c) selecting comprising a first step of selection using the NO-TIME DOUGH process by at least two of the following three criteria combined together :
1) in a dough containing 15 % of sugar (baker's percentage) with or without addition of 0.4 % of calcium propionate (baker's percentage), the selected strains correspond to baker's yeasts which give a proof time at least equivalent, that is to say, less than or equal to, the proof time obtained with the control obtained with the baker's yeast strain NCYC 996;
2) in a dough containing 25 % of sugar (baker's percentage) and 0.4 % of calcium propionate (baker's percentage), the selected strains correspond to baker's yeasts which give a proof time at least 5 % lower and preferably at least 10 % lower than the proof time obtained with the control;
3) in a dough containing 40 % of sugar (baker's percentage), the selected strains correspond to baker's yeasts which give a proof time at least 20 % lower, preferably at least 30 % lower and even more preferably at least 35 % lower than the proof time of the control; and,
d) selecting comprising a second step of selection in combination and as a complement of the first step c), wherein the selected strain has to meet one of these two additional criteria:
1) it must be resistant to drying and not lose more than 30 % of its fermentative activity, for a constant dry matter content, as measured with a Burrows and Harrison fermentor in tests A₅, A'₅, A₆, A'₆.
2) in a SPONGE and DOUGH process **characterized by** a DOUGH step comprising the addition of 25 % of saccharose by mass relative to the total flour mass employed in SPONGE and DOUGH, it must give in relation to a DOUGH obtained in the same conditions and seeded with a baker's yeast obtained in the same conditions with the strain NCYC 996, a proof time which is at least 20 % lower, preferably at least 30 % lower, and even more preferably at least 40 %.

6. Process of claim 5, wherein a direct combination of the five selection criteria is used and strains that meet at least three of said criteria, and preferably four of said selection criteria, are selected.

7. A process of transformation of one of the strains according to anyone of claims 1 to 4, wherein one of the strains is transformed by mutagenesis or genetic transformation.

8. A baker's yeast obtained by culturing one of the strains according to anyone of claims 1 to 4.

9. Bread-making dough containing a baker's yeast according to claim 8.

10. Bread-making dough according to claim 9 in which fermentation takes place in the presence of an osmotic pressure such as that existing in doughs containing at least 15 % of sugar relative to the mass of flour, preferably at least 25 % of sugar relative to the mass of flour and even more preferably 40 % or more sugar relative to the mass of flour.

11. Bread-making dough according to claim 10, wherein it contains mould inhibitors, preferably in the form of weak organic acids and/or the salts thereof, and more preferably in the form of propionates.

12. Method of preparation of a baked bread product using a bread-making dough according to any one of claims 9-11.

13. Bread product obtainable by the method according to claim 12.

## Patentansprüche

1. Stamm von *Saccharomyces cerevisiae,* der am 12. Februar 2003 bei der CNCM unter der Nummer I-2971 hinterlegt wurde.

2. Stamm von *Saccharomyces cerevisiae,* der am 25. November 2003 bei der CNCM unter der Nummer I-3142 hinterlegt wurde.

3. Stamm von *Saccharomyces cerevisiae,* der am 25. November 2003 bei der CNCM unter der Nummer I-3143 hinterlegt wurde.

4. Stamm von *Saccharomyces cerevisiae,* der von einem der Stämme gemäß einem der Ansprüche 1 bis 3 abgeleitet ist, wobei er sich die Leistungseigenschaften auf zukkerhaltigen Teigen in Gegenwart schwacher organischer Säuren und/oder ihrer Salze teilt und durch die Schritte c) und d) des Herstellungsverfahrens des Anspruchs 5 selektioniert werden kann.

5. Verfahren zur Herstellung auf zuckerhaltigen Teigen leistungsfähiger Stämme von *Saccharomyces cerevisiae,* die eine gute Toleranz gegenüber schwachen organischen Säuren aufweisen, bei dem die Stämme durch
a) ein Verfahren zur Kreuzung eher osmotoleranter und auf die Gegenwart schwacher organischer Säuren oder ihrer Salze wenig empfindlicher Stämme,
b) ein Verfahren zur Vermehrung unter Anpassung an die Gegenwart einer organischen Säure (organischer Säuren),
c) ein Verfahren zur Selektion, das einen ersten Selektionsschritt der Führung NO-TIME DOUGH nach mindestens zwei der drei nachfolgenden Kriterien zusammen und bevorzugt den drei folgenden Kriterien zusammen umfasst:
1) auf einem 15 % Zucker (Bäckerprozent) enthaltenden Teig in Gegenwart von 0,4 % Calciumpropionat (Bäckerprozent) oder nicht entsprechen die selektionierten Stämme Bäckerhefen, die eine Gärzeit ergeben, die der Gärzeit äquivalent, das heißt kleiner oder gleich ist, die mit der mit dem Bäckerhefestamm NCYC996 erhaltenen Kontrolle erhalten wurde,
2) auf einem 25 % Zucker (Bäckerprozent) und 0,4 % Calciumpropionat (Bäckerprozent) enthaltenden Teig entsprechen die selektionierten Stämme Bäckerhefen, die eine mindestens 5 % und bevorzugt mindestens 10 % niedrigere Gärzeit als die Gärzeit der Kontrolle ergeben,
3) auf einem 40 % Zucker (Bäckerprozent) enthaltenden Teig entsprechen die selektionierten Stämme Bäckerhefen, die eine mindestens 20 %, bevorzugt mindestens 30 % und besonders bevorzugt mindestens 35 % niedrigere Gärzeit als die Gärzeit der Kontrolle ergeben, und
d) ein Verfahren zur Selektion erhalten werden, das eine zweite Selektion zusammen und als Ergänzung zu dem ersten Schritt c) umfasst, bei dem der selektionierte Stamm eines der beiden zusätzlichen Kriterien erfüllen muss:
1) er muss trocknungsbeständig sein und darf nicht mehr als 30 % seiner mit einem Fermentometer nach Burrows und Harrison bei den Tests A5, A'5, A6 und A6' gemessenen Gäraktivität bei einem konstanten Trockenmaterialgehalt verlieren,
2) bei einer Führung SPONGE und DOUGH, die durch einen Schritt DOUGH **gekennzeichnet** ist, bei dem 25 Gew.-% Saccharose bezogen auf das gesamte bei SPONGE und DOUGH eingesetzte Mehl zugesetzt werden, muss er in Bezug auf einen unter denselben Bedingungen erhaltenen und mit einer Bäckerhefe, die unter denselben Bedingungen wie bei dem Stamm NCYC 996 erhalten wurde, angesetzten DOUGH eine mindestens 20 %, bevorzugt mindestens 30 % und besonders bevorzugt mindestens 40 % niedrigere Gärzeit ergeben.

6. Verfahren gemäß Anspruch 5, bei dem die fünf Selektionstests direkt zusammen angewendet werden und die mindestens drei dieser Kriterien und bevorzugt fünf dieser Selektionskriterien erfüllenden Stämme selektioniert werden.

7. Verfahren zur Transformation eines Stammes gemäß einem der Ansprüche 1 bis 4, bei dem einer dieser Stämme durch Mutagenese oder genetische Transformation transformiert wird.

8. Bäckerhefe erhalten durch Kultur eines Stammes gemäß einem der Ansprüche 1 bis 4.

9. Backteig enthaltend eine Bäckerhefe gemäß Anspruch 8.

10. Backteig gemäß Anspruch 9, **dadurch gekennzeichnet, dass** er der Familie der Teige angehört, bei denen die Gärung bei einem osmotischen Druck wie dem, der bei den mindestens 15 % Zucker bezogen auf das Mehl, bevorzugt mindestens 25 % Zucker bezogen auf das Mehl und besonders bevorzugt etwa 40 % Zucker bezogen auf das Mehl enthaltenden Teigen vorherrscht, erfolgt.

11. Backteig gemäß Anspruch 10, **dadurch gekennzeichnet, dass** er Schimmelhemmer, bevorzugt in Form schwacher organischer Säuren oder ihrer Salze und besonders bevorzugt in Propionatform enthält.

12. Verfahren zur Herstellung eines Brotbackprodukts unter Verwenden des Backteigs gemäß einem der Ansprüche 9 bis 11.

13. Brotprodukt erhältlich durch das Verfahren gemäß Anspruch 12.
